# EUROPÄISCHE PATENTSCHRIFT

(11) **EP 4 486 105 B1**
(45) Veröffentlichungstag und Bekanntmachung des Hinweises auf die Patenterteilung: **08.04.2026**
(21) Anmeldenummer: 23710659.6
(22) Anmeldetag: 28.02.2023
(51) Int. Cl.: A01B 29/04, A01B 33/02

(54) **BODENBEARBEITUNGSGERÄT**
SOIL-CULTIVATION DEVICE
APPAREIL DE TRAVAIL DU SOL

(30) Priorität: 02.03.2022 DE 102022104961
(43) Veröffentlichungstag der Anmeldung: 08.01.2025
(73) Patentinhaber: Lemken GmbH & Co KG, 46519 Alpen (DE)
(72) Erfinder: GEBBEKEN, Martin, 46519 Alpen (DE); BERENDSEN, Mark, 7044 AJ Lengel (NL)
(86) Internationale Anmeldenummer: PCT/DE2023/100155
(87) Internationale Veröffentlichungsnummer: WO 2023/165652

(56) Entgegenhaltungen:
- DE-A1- 102016 009 433
- DE-A1- 102017 113 201
- US-A1- 2007 240 888

## Beschreibung

Die vorliegende Erfindung betrifft ein Bodenbearbeitungsgerät in Form einer Walze für ein landwirtschaftliches Gerät.

In der Landwirtschaft werden Walzen üblicherweise zur Rückverfestigung des Bodens nach einer vorangegangenen Bearbeitung eingesetzt, wobei dies zeitlich versetzt oder zusammen in Kombination mit anderen Bodenbearbeitungsgeräten erfolgen kann. Zur Bearbeitung des Bodens wird einerseits das Gewicht der Walze genutzt, andererseits kann auch durch eine Profilierung der Mantelfläche der Walze eine besondere Wirkung im Boden erzielt werden. Eine derartige Profilierung kann beispielsweise durch einen Aufbau der Walze aus einzelnen Scheiben oder Ringen erreicht werden. Bei einer Kombination mit anderen Bodenbearbeitungsgeräten, beispielsweise einer Bestellkombination zur Saatausbringung mit Säscharen, kann eine Walze zur Saatbettvorbereitung unmittelbar vor den Säscharen angeordnet sein, um eine Vorverdichtung des Bodens zu bewirken. Darüber hinaus können Walzen auch zur Tiefenführung eines Bodenbearbeitungsgerätes genutzt werden, da sie üblicherweise nur geringfügig in den Boden einsinken und im Wesentlichen auf der Oberfläche abrollen.

Eine derartige Bodenwalze ist aus der DE 195 17 184 A1 bekannt, wobei die Bodenwalze ein Tragrohr und darauf beabstandet angeordnete Verdichtungsringe umfasst. Zwischen den Verdichtungsringen kann sich während der Bodenbearbeitung Erde ansammeln, wodurch eine optimale Wirkung der Walze verringert werden kann. Zudem kann Erde in das Innere der Bodenwalze gedrückt werden, was zu einer beschleunigten Korrosion und einer verminderten Standzeit der Bodenwalze führen kann. Rückseitig des Tragrohres sind unterhalb der Drehachse der Bodenwalze Abstreifer angeordnet, welche zwischen die Verdichtungsringe eingreifen und die Walze kontaktieren oder zumindest sehr dicht an diese heranreichen. Die Abstreifer dienen der Entfernung von Bodenanhaftungen, die sich während der Arbeit auf dem Feld zwischen den Verdichtungsringen ansammeln, wobei durch die Abstreifer und die Bodenanhaftungen ein Abrollen der Bodenwalze erschwert werden kann, wodurch die Walze schwergängiger zu ziehen sein kann. Ähnliche Bodenwalzen werden beispielsweise auch in den DE102017113201A1, US2007/240888A1 oder DE102016009433A1 offenbart.

Es ist daher die Aufgabe der vorliegenden Erfindung, eine Walze zur Bodenbearbeitung sowie ein landwirtschaftliches Gerät zur Bodenbearbeitung bereitzustellen, welche eine verbesserte und leichtere Bearbeitung des Bodens ermöglicht, sowie eine verbesserte Standzeit aufweist.

Die Aufgabe wird gelöst durch eine Walze gemäß den Merkmalen des Anspruches 1 sowie durch ein landwirtschaftliches Gerät zur Bodenbearbeitung gemäß Anspruch 15.

Vorteilhafte Ausgestaltungen der Erfindung sind in den Unteransprüchen angegeben.

Eine Walze zur landwirtschaftlichen Bodenbearbeitung umfasst mindestens einen um eine Drehachse drehbar gelagerten Tragkörper und mehreren voneinander beabstandet nebeneinander an dem Tragkörper angeordnete Verdichtungsringe zur Verdichtung des Bodens und zwischen benachbarten Verdichtungsringen angeordneten Zwischenringe, wobei mindestens ein erster Zwischenring und ein zweiter Zwischenring mit unterschiedlichen Durchmessern und/oder unterschiedlichen Breiten vorgesehen sind. Gemäß der Erfindung weist die Walze mindestens eine Ringeinheit auf, welche mindestens einen Verdichtungsring und mindestens einen, insbesondere zweiten, Zwischenring umfasst, wobei der Zwischenring mit mindestens einem benachbarten Verdichtungsring stoffschlüssig verbunden oder einstückig mit dem Verdichtungsring ausgebildet ist.

Der Tragkörper der Walze kann an einem Tragrahmen oder direkt einem Grundrahmen, beispielsweise einer Kombination aus mehreren Bodenbearbeitungsgeräten wie einer Bestellkombination zur Saatausbringung, um eine Drehachse drehbar gelagert sein. Die Verdichtungsringe der Walze können in axialer Richtung, entlang der Drehachse, auf den Tragkörper aufgeschoben werden. Die auf dem Tragkörper montierten Verdichtungsringe können tragkörperseitig beabstandet zueinander oder tragkörperseitig miteinander in Kontakt stehend angeordnet sein. Die Verdichtungsringe können in Form sogenannter Trapezringe zur Reihenvorverdichtung für Säschare einer Bestellkombination zur Saatgutausbringung ausgebildet sein. Zwischen zwei benachbarten Verdichtungsringen kann jeweils mindestens ein Zwischenring angeordnet sein, wobei Zwischenringe, bezogen auf den Tragkörper und/oder dessen Drehachse, in axialer Richtung unterschiedliche Breiten und/oder in radialer Richtung unterschiedliche Durchmesser aufweisen können.

Zwischenringe mit einem geringeren Durchmesser können einen hohen und leichten Durchgang an Erde ermöglichen, können dafür aber weniger Rückverfestigung und Einebnung des Bodens bewirken. Zwischenringe mit einem größeren Durchmesser, die also dichter an den Boden heranreichen, können eine höherer Rückverfestigung und Einebnung des Bodens ermöglichen, können aber einen geringeren und schwereren Durchgang an Erde aufgrund ihres radial außenseitig geringeren Abstandes zum Boden haben. Durch die Anordnung von Zwischenringen mit unterschiedlichen Durchmessern und/oder Breiten entlang des Tragkörpers zwischen den Verdichtungsringen kann eine Walze vorteilhafterweise an unterschiedlichen Einsatzbedingungen und Gerätekombinationen angepaßt werden.

Hierdurch kann die Walze, beispielsweise als Reihenvorverdichtungswalze einer Bestellkombination zur Saatgutausbringung, derart ausgestaltet sein, dass diese überwiegend einen hohen, leichten Durchgang an Erde und in den notwendigen Bereichen die benötigte Rückverfestigung und Einebnung des Bodens aufweist.

Mindestens ein Verdichtungsring ist mit einem, insbesondere zweiten, Zwischenring zu einer Ringeinheit mittels einer stoffschlüssigen Verbindung oder einer einstückigen Ausgestaltung zusammengefasst. Hierbei können auch jeweils zwei Verdichtungsringe mit einem dazwischen angeordneten, insbesondere zweiten, Zwischenring zu einer Ringeinheit zusammengefasst werden. Die Ringeinheit bietet aufgrund der stoffschlüssigen Verbindung oder einstückigen Ausgestaltung den Vorteil, dass ein Eindringen beispielsweise von Erde oder Wasser in die im Wesentlichen staubdichte und wasserdichte Ringeinheit vermieden werden kann, wodurch Korrosion vermieden und die Standzeit der Walze verbessert werden kann. Durch die zudem überwiegend leichtzügige Ausgestaltung der Walze und der hinreichenden Rückverfestigung und Einebnung des Bodens, kann auch eine Bearbeitung des Bodens verbessert und erleichtert werden.

In einer bevorzugten Ausgestaltung weist die Walze mindestens einen ersten Zwischenring mit einem ersten Durchmesser und einer ersten Breite und mindestens einen zweiten Zwischenring mit einem zweiten Durchmesser und einer zweiten Breite auf, wobei der erste Durchmesser kleiner ist als der zweite Durchmesser und/oder die erste Breite kleiner ist als die zweite Breite. Die Zwischenringe können koaxial zu den Verdichtungsringen und/oder dem Tragkörper angeordnet sein. Der erste Zwischenring ist in einem montierten Zustand in radialer Richtung näher am Tragkörper angeordnet als der zweite Zwischenring. Dies hat den Vorteil, dass der erste Zwischenring einen höheren Durchgang an Erde ermöglichen kann als der zweite Zwischenring und die Walze dadurch leichtzügiger sein kann. Die in radialer Richtung weiter von dem Tragkörper beabstandet angeordneten zweiten Zwischenringe bieten den Vorteil einer verbesserten Rückverfestigung und Einebnung des Bodens zwischen den angrenzenden Verdichtungsringen, wodurch beispielsweise ein verbessertes Saatbett bereitgestellt werden kann. Die zweiten Zwischenringe können eine größere Breite als die ersten Zwischenringe aufweisen, wodurch ein größerer Bereich zwischen Verdichtungsringen rückverdichtet und eingeebnet werden kann. Der erste Zwischenring und der zweite Zwischenring können aus dem gleichen oder aus unterschiedlichem Material, beispielsweise Kunststoff, Metall und/oder einem elastischen Werkstoff, hergestellt sein. Beispielsweise kann ein erster Zwischenring bei geringerer Belastung aus Kunststoff und ein zweiter Zwischenring aufgrund des höheren Bodenkontaktes aus Metall gefertigt sein.

In einer besonders bevorzugten Ausgestaltung weist der, insbesondere zweite, Zwischenring umfangsseitig einen Schutzring auf. Der Schutzring kann in Form eines radial außenseitig an dem Schutzring angeordneten Ringes ausgestaltet sein. Der Schutzring kann hierbei stoffschlüssig, formschlüssig und/oder kraftschlüssig mit dem Zwischenring verbunden sein. Der Schutzring kann die gleiche oder geringfügig geringere Breite als der zugeordnete Zwischenring aufweisen, wobei eine geringfügig geringere Breite den Vorteil bietet, dass der unter dem Schutzring angeordnete Zwischenring nach einer Montage randseitig von außen zugänglich bleibt, beispielsweise um eine stoffschlüssige Verbindung mit einem an dem Zwischenring anliegenden Verdichtungsring herzustellen. Denkbar ist ferner, dass der Schutzring einstückig mit dem Zwischenring hergestellt ist, beispielsweise durch einen Herstellungsprozess, der die Verarbeitung von zwei unterschiedlichen Werkstoffen ermöglicht.

In einer weiteren Ausgestaltung der Erfindung weisen die Verdichtungsringe und/oder die Zwischenringe jeweils ein Innenprofil zur kraftschlüssigen und/oder formschlüssigen Verbindung mit dem Tragkörper auf. Der Tragkörper kann in Form eines im Wesentlichen zylindrischen oder profilierten Körpers wie einer Profilwelle ausgebildet sein. Die Verdichtungsringe und/oder Zwischenringe können in axialer Richtung auf den Tragkörper aufgeschoben werden. Vorteilhaft ist dabei die vereinfachte Montage der Verdichtungsringe und/oder Zwischenringe auf dem Tragkörper und dass die Verdichtungsringe und/oder Zwischenringe verdrehsicher an dem Tragkörper angeordnet werden können, wodurch deren Drehbewegung zuverlässiger erfolgen und die Funktionssicherheit der Walze erhöht werden kann. Das Innenprofil des Verdichtungsringes und/oder des Zwischenringes kann entlang der Drehachse durchgängig ausgebildet sein, wodurch eine große Kontaktfläche für eine Kraftübertragung hergestellt und eine Kraftübertragung beispielsweise auf den Tragkörper verbessert werden kann.

In einer besonders bevorzugten Ausgestaltung ist der Tragkörper in Form eines Vierkantrohres und das Innenprofil in Form eines an die Form des Tragkörpers zur Wirkverbindung angepaßten Vierkantprofils ausgebildet. Diese Form des Tragkörpers und des Innenprofils ermöglicht eine einfache, verdrehsichere Montage der Walze und eine zuverlässige Wirkverbindung zwischen Tragkörper und Ringeinheit, Verdichtungsring und/oder Zwischenring zur Kraftübertragung. Vorteilhaft ist dabei neben der vereinfachten Montage der Ringeinheit, der Verdichtungsringe und/oder Zwischenringe auf dem Tragkörper, dass die Ringeinheit, Verdichtungsringe und/oder Zwischenringe verdrehsicher an dem Tragkörper angeordnet werden können, wodurch deren Drehbewegung zuverlässiger erfolgen und die Funktionssicherheit der Walze erhöht werden kann In einer besonders bevorzugten Ausgestaltung ist der Verdichtungsring aus mindestens zwei Halbschalen, insbesondere stoffschlüssig, zusammengesetzt. Die Halbschalen können jeweils in axialer Richtung auf den Tragkörper aufgesteckt werden. Vor einer Montage auf dem Tragkörper können die Halbschalen zu einem Verdichtungsring stoffschlüssig miteinander verbunden werden. Durch die, insbesondere symmetrisch ausgestalteten, Halbschalen kann ein Verdichtungsring kostengünstig hergestellt und einfach montiert werden.

In einer weiteren besonders bevorzugten Ausgestaltung weist der Verdichtungsring zumindest an einer Seite eine im Wesentlichen plane Seitenfläche zur stoffschlüssigen Verbindung mit einem, insbesondere zweiten, Zwischenring auf. Die plane Seitenfläche hat den Vorteil, dass Zwischenringe unterschiedlichen Durchmessers mit der Seitenfläche stoffschlüssig verbunden werden können.

Vorzugsweise sind die Ringeinheit, der Verdichtungsring, die Halbschalen und/oder der Zwischenring in Form eines Spritzgußteils hergestellt. Das Spritzgießen ermöglicht die Herstellung der Ringeinheit, des Verdichtungsring, der Halbschalen und/oder des Zwischenringes als Kunststoffteil, welches kostengünstig herstellbar ist und zudem eine hohe Korrosionsfestigkeit bietet. Denkbar ist auch, dass ein Zwischenring durch Extrusion als kostengünstiges Extrusionsbauteil, insbesondere aus Kunststoff, hergestellt werden kann.

Bevorzugt weisen die Ringeinheit, der Verdichtungsring, die Halbschalen und/oder der Zwischenring eine innenseitig ausgebildete Rippenstruktur und/oder Ausnehmungen auf. Durch die Ausbildung von Ausnehmungen kann das Gewicht der Bauteile reduziert werden. Die Ausgestaltung einer Rippenstruktur im Inneren der Ringeinheit, des Verdichtungsrings, der Halbschalen und/oder des Zwischenrings ermöglicht einer Vergrößerung deren Festigkeit bei verringertem Gewicht und eine Verbesserung der Kraftübertragung.

In einer bevorzugten Ausgestaltung weist der, insbesondere zweite, Zwischenring entlang seiner Umfangsseite ein Außenprofil auf, welches sich insbesondere nach radial außenseitig von der Umfangsfläche erstreckt. Das Außenprofil kann in Form von Stegen, welche radial außen an der Umfangsseite angeordnet sind, ausgebildet sein. Die Stege können in einem Winkel oder parallel zu der Drehachse angeordnet sein. Durch das Außenprofil kann eine, beispielsweise kraft- und/oder formschlüssige, Verbindung des Zwischenringes mit dem Schutzring verbessert werden. Das Außenprofil kann ebenfalls nach radial innen gerichtete Vertiefungen aufweisen, beispielsweise zur formschlüssigen Verbindung mit einem innenseitig entsprechend ausgestalteten Schutzring.

Vorzugsweise ist eine stoffschlüssige Verbindung zwischen den Halbschalen und/oder zwischen dem Verbindungsring und mindestens einem Zwischenring durch zumindest teilweises Kleben und/oder Verschweißen, insbesondere durch Laserstrahlschweißen oder Heizelementschweißen, hergestellt. Das Heizelementschweißen kann dabei in Form von Spiegelschweißen erfolgen, wodurch auch flächige Verbindungen, beispielsweise der Seitenfläche des Verdichtungsringes mit einem Zwischenring, erfolgen können. Hierdurch können auch beispielsweise zwei Verdichtungsringe mit einem dazwischen angeordneten, insbesondere zweiten, Zwischenring zu einer Ringeinheit stoffschlüssig zusammengefügt werden.

In einer weiterhin bevorzugten Ausgestaltung sind dem ersten Zwischenring ein Ausräumer und/oder dem zweiten Zwischenring ein Abstreifer zugeordnet. Die Ausräumer und Abstreifer können jeweils einem Zwischenring zugeordnet sein und in einen Zwischenraum zwischen benachbarten Verdichtungsringen, zumindest teilweise, hineinragen, um Erdanhaftungen aus dem jeweiligen Zwischenraum entfernen zu können. Die Ausräumer und Abstreifer können an dem Tragrahmen angeordnet sein. Der Tragrahmen ist in Arbeitsrichtung hinter der Drehachse der Walze angeordnet, wodurch kürzere und damit stabilere Ausräumer und/oder Abstreifer eingesetzt werden können. Bei dem ersten Zwischenring mit einem geringeren Durchmesser kann es zu geringeren Erdanhaftungen kommen als bei dem zweiten Zwischenring mit dem größeren Durchmesser, so dass bei einem ersten Zwischenring ein Ausräumer zur Beseitigung von Erdanhaftungen ausreichend sein kann. Der Ausräumer ragt dabei teilweise zwischen die benachbarten Verdichtungsringe, ist jedoch beabstandet zu dem ersten Zwischenring angeordnet, so dass ein geringer Reibungswiderstand auftritt. Ein Abstreifer hingegen kann weiter in den Zwischenraum zwischen den Verdichtungsringen hineinragen und den zweiten Zwischenring umfangsseitig kontaktieren oder sehr dicht an diesen heranreichen. Dadurch kann der Widerstand im Betrieb höher als bei dem Ausräumer. Durch den Einsatz von ersten und zweiten Zwischenringen mit unterschiedlichen Durchmessern kann die Anzahl der benötigten Abstreifer reduziert und damit die Reibung insgesamt verringert werden, so dass die Walze leichter ziehbar sein kann.

Vorzugsweise ist endseitig an dem Tragkörper mindestens eine Lagervorrichtung angeordnet, welche eine einstellbare axiale Vorspannkraft aufweist, welche eine Aufbringung einer im Wesentlichen axialen Kraft auf die Ringeinheit, die Verdichtungsringe und/oder Zwischenringe ermöglicht. Durch die Lagervorrichtung kann der Tragkörper mit der die Ringeinheit, den Verdichtungsringen und/oder Zwischenringen drehbar an dem Tragrahmen gelagert werden. Durch die Aufbringung einer axialen Vorspannkraft kann die Stabilität und Funktionssicherheit der Walze erhöht werden.

In einer bevorzugten Ausgestaltung der Erfindung weist die Walze mehrere, jeweils an einem Grundrahmen gelagerte Tragkörper auf, welche insbesondere klappbar miteinander verbunden sind. Durch die Anordnung mehrerer Tragkörper, insbesondere jeweils über einen Tragrahmen, an dem Grundkörper kann die Walze kompakter ausgebildet werden, wodurch auch bei großen Arbeitsbreiten ein sicherer und vorschriftenkonformer Straßentransport ermöglicht werden kann.

Die Erfindung betrifft weiterhin ein landwirtschaftliches Gerät zur Bodenbearbeitung und/oder Ausbringung von körnigen Feststoffen in Form von Dünger und/oder Saatgut mit mindestens einer wie vorstehend beschriebenen und ausgebildeten Walze. Das landwirtschaftliche Gerät kann dabei in Form einer Bestellkombination zur Saatgutausbringung ausgebildet sein, welches beispielsweise eine Mehrzahl an Säscharen aufweist, wobei jeweils ein Säschar einem Verdichtungsring zugeordnet sein kann.

In einer bevorzugten Ausgestaltung des landwirtschaftlichen Gerätes weist das Gerät in Arbeitsrichtung vor der mindestens eine Walze eine Mehrzahl an Bodeneingriffsmitteln in Form von Reifen und/oder Raupen auf. Das Gerät kann dabei in Arbeitsrichtung vor der Walze ein Fahrwerk aus mehreren, nebeneinander angeordneten Bodeneingriffsmitteln wie Reifen aufweisen, welche im Wesentlichen die Arbeitsbreite des Gerätes abdecken und das Maschinengewicht tragen und den Boden Rückverdichten und einebnen können. Der Walze, insbesondere den Verdichtungsringen, nachfolgend kann das Gerät jeweils Säschare zur Einbringung eines Saatgutes in den Boden hinter der Walze aufweisen.

Aufgrund der Lagerung der Bodeneingriffsmittel kann zwischen den

Bodeneingriffsmitteln jeweils ein Abstand oder Spalt ausgebildet sein. Dieser Spalt kann dazu führen, dass bei der Bodenbearbeitung zwischen den Bodeneingriffsmitteln die Erde geringer Rückverfestigt werden und jeweils ein Damm aus Erde entstehen kann. Den Spalten zwischen zwei Bodeneingriffsmitteln kann in Arbeitsrichtung jeweils ein zweiter Zwischenring zugeordnet sein, während dem restlichen Arbeitsbereich jeweils erste Zwischenringe zugeordnet sein können. Dies hat den Vorteil, dass durch die zweiten Zwischenringe jeweils der Bereich zwischen den Bodeneingriffsmitteln rückverfestigt und eingeebnet werden kann und die restlichen Bereiche erste Zwischenringe aufweisen, wodurch mit einer leichtzügigeren Walze ein verbessertes Saatbett erstellt werden kann.

Die Erfindung wird nachfolgend anhand eines Ausführungsbeispiels näher erläutert.

**In** den Figuren zeigt:
- Figur 1: ein landwirtschaftliches Gerät in Form einer Bestellkombination zur Saatgutausbringung mit einer erfindungsgemäßen Walze in einer schematischen Draufsicht;
- Figur 2: einen ersten Zwischenring, welcher seitlich an einer Ringeinheit bestehend aus zwei Verdichtungsringen und einem dazwischen angeordneten zweiten Zwischenring angeordnet ist;
- Figur 3: eine perspektivische Ansicht der Ringeinheit und des ersten Zwischenringes aus Figur 2;
- Figur 4: eine perspektivische Ansicht eines zweiten Zwischenringes mit einer Rippenstruktur und Ausnehmungen; und
- Figur 5: eine perspektivische Ansicht einer Halbschale eines Verdichtungsringes.

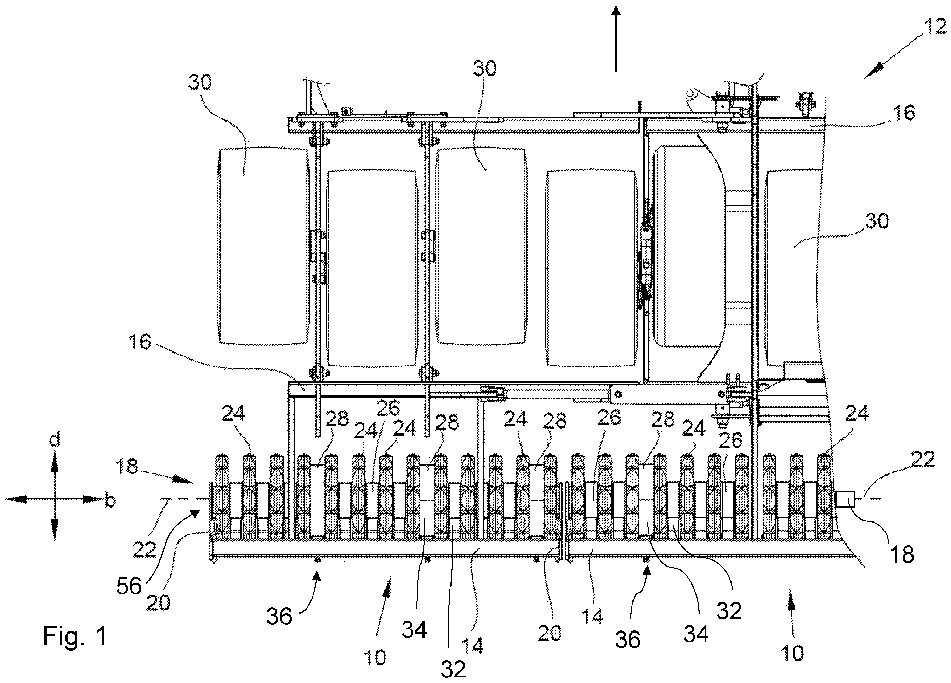

In Figur 1 ist ein landwirtschaftliches Gerät 12 in Form einer Bestellkombination zur Saatgutausbringung in einer schematischen Ansicht von oben dargestellt. Das landwirtschaftliche Gerät 12 weist an einem Grundrahmen 16 angeordnete Bodeneingriffsmittel 30 in Form von Reifen auf, welche nebeneinander angeordnet sind und im Wesentlichen die Arbeitsbreite des Gerätes 12 abdecken. Die Bodeneingriffsmittel 30 können dabei im Wesentlichen das Gewicht des Gerätes 12 tragen und können zudem der Rückverfestigung und Einebnung des Bodens für das anschließende Einbringen des Saatgutes dienen. Zur Vorbereitung der Saatgutausbringung durch Säschare (nicht dargestellt) ist den Bodeneingriffsmitteln 30 in Arbeitsrichtung (Pfeil) folgend eine Walze 10 angeordnet, welche sich ebenfalls über die Arbeitsbreite des Gerätes 12 erstreckt und den Säscharen in Arbeitsrichtung vorgelagert ist. Die dargestellte Walze 10 ist mehrteilig ausgestaltet und weist Tragrahmen 14 auf, welche jeweils an dem Grundrahmen 16 befestigt sind und beispielsweise für einen Straßentransport klappbar ausgebildet sind.

Die Walze 10 umfasst eine Vielzahl an Verdichtungsringen 24, welche nebeneinander entlang eines Tragkörpers 18 an diesem angeordnet sind, wobei zwischen den Verdichtungsringen 24 jeweils Zwischenringe 26, 28 angeordnet sind. Über eine endseitig an dem Tragkörper 18 angeordnete Lagervorrichtung 56 werden die Verdichtungsringe 24 und Zwischenringe 26, 28 in axialer Richtung vorgespannt. Der in Form eines Vierkantprofil ausgestaltete Tragkörper 18 ist um eine Drehachse 22 drehbar gelagert und über Stege 20 mit dem Tragrahmen 14 verbunden. Die Verdichtungsringe 24 sind jeweils einem Säschar (nicht dargestellt) vorgelagert und dienen der Reihenvorverdichtung für das anschließende Ausbringen des Erntegutes durch die Säschare jeweils in die vorverdichteten Reihen. Aufgrund der Lagerung der Bodeneingriffsmittel 30 an dem Grundrahmen 16 ist zwischen den Bodeneingriffsmitteln 30 jeweils ein Spalt ausgebildet, so dass der Boden zwischen den Bodeneingriffsmitteln 30 geringer rückverfestigt und eingeebnet wird und jeweils ein Damm aus Erde entstehen kann.

Die Walze 10 weist mindestens einen ersten Zwischenring 26 und einen zweiten Zwischenring 28 auf, welche unterschiedliche Durchmesser d1, d2 und/oder unterschiedliche Breiten b1, b2 aufweisen. Die Zwischenringe 26, 28 sind dabei in Form eines ersten Zwischenringes 26 mit einem ersten Durchmesser d1 und einer ersten Breite b1 oder eines zweiten Zwischenringes 28 mit einem zweiten Durchmesser d2 und einer zweiten Breite b2 ausgebildet. Der Durchmesser d1 des ersten Zwischenringes 26 ist dabei kleiner als der Durchmesser d2 des zweiten Zwischenringes 28. Der erste Zwischenring 26 ermöglicht einen leichteren Durchgang des Bodens zwischen den angrenzenden Verdichtungsringen 24, wohingegen der zweite Zwischenring 28 einen geringeren Durchgang aufweist, dafür aber eine höhere Rückverfestigung und Einebnung des Bodens ermöglicht. In der dargestellten Ausführung der Walze 10 ist jedem Spalt zwischen zwei Bodeneingriffsmitteln 30 ein zweiter Zwischenring 28 an der Walze 10 zugeordnet, während in dem restlichen Arbeitsbereich jeweils ein erster Zwischenring 26 zwischen den Verdichtungsringen 24 angeordnet ist. Hierdurch kann an den benötigten Stellen durch die zweiten Zwischenringe 28 der Boden zur Saatbettvorbereitung rückverfestigt und eingeebnet werden, wobei im Wesentlichen die Leichtzügigkeit der Walze 10 durch die überwiegende Anzahl an ersten Zwischenringen 26 erhalten bleibt.

Den zwischen den Verdichtungsringen 24 angeordneten zweiten Zwischenringen 28 ist jeweils ein Abstreifer 34 zugeordnet, welcher das zweite Zwischenelement 28 im Wesentlichen kontaktiert. Die den ersten Zwischenringen 26 zugeordneten Ausräumer 32 greifen weniger weit in den jeweiligen Raum zwischen den Verdichtungsringen 24 ein. Die Ausräumer 32 und Abstreifer 34 sind jeweils an dem Tragrahmen 14 angeordnet, welcher hinter der Drehachse 22 der Walze 10 angeordnet ist, wodurch die Ausräumer 32 und Abstreifer 34 kürzer und starrer ausgestaltet werden können.

Gemäß der Erfindung weist die Walze 10 mindestens eine Ringeinheit 36 auf, welche mindestens einen Verdichtungsring 24 und mindestens einen, insbesondere zweiten, Zwischenring 26, 28 umfasst, wobei der Zwischenring 26, 28 mit mindestens einem benachbarten Verdichtungsring 24 stoffschlüssig verbunden oder einstückig mit dem Verdichtungsring 24 ausgebildet ist. Die in Figur 1 dargestellten Ringeinheiten 36 weisen jeweils zwei Verdichtungsringe 24 und ein dazwischen angeordneten und mit den Verdichtungsringen 24 stoffschlüssig verbundenen zweiten Zwischenring 28 auf.

Zum Entfernen von anhaftender Erde sind den ersten Zwischenringen 26 jeweils Ausräumer 32 zugeordnet, welche beabstandet zu den ersten Zwischenringen 26 angeordnet sind und nur eine geringe Reibung verursachen. Den zweiten Zwischenringen 28 sind jeweils Abstreifer 34 zugeordnet, welche die zweiten Zwischenringe 28 kontaktieren oder zumindest eng an diesen angeordnet sind und eine höhere Reibung als die Ausräumer 32 verursachen. Die Anzahl der zweiten Zwischenringe 28 kann dabei von der Anzahl der Bodeneingriffsmittel 30 und den zwischen diesen gebildeten Spalten abhängen.

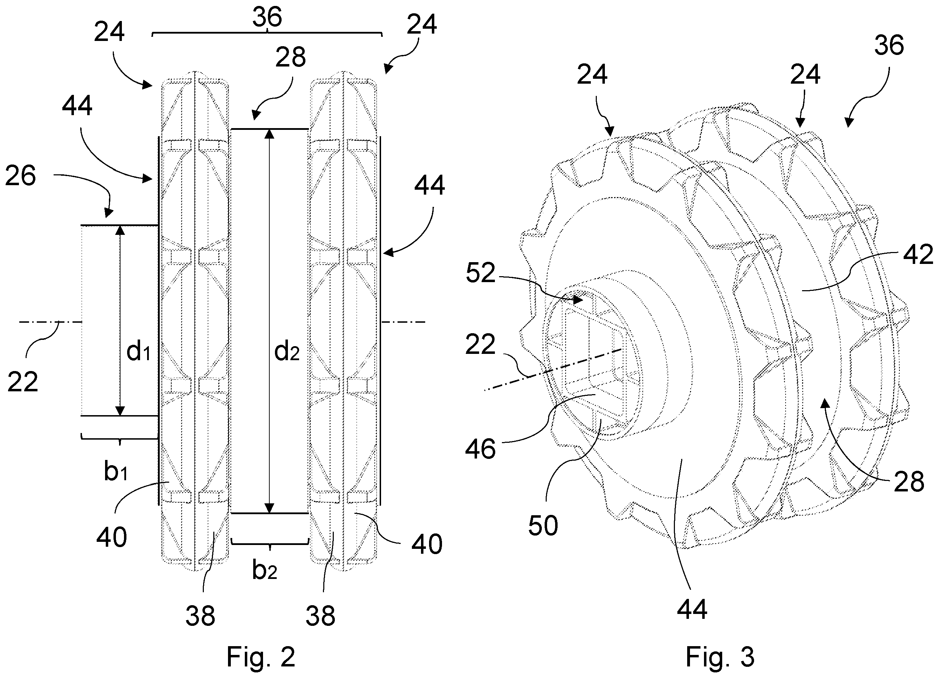

**In** Figur 2 ist in Arbeitsrichtung von hinten gesehen eine Ringeinheit 36 dargestellt, welche um die Drehachse 22 drehbar an dem Tragkörper (nicht dargestellt) angeordnet ist. Die dargestellte Ringeinheit 36 besteht aus zwei Verdichtungsringen 24, die beiderseits mit einem zweiten Zwischenring 28 stoffschlüssig verbunden sind. Radial außenseitig ist an dem zweiten Zwischenring 28 ein Schutzring 42 angeordnet. Der Schutzring 42 kann als Metallring ausgebildet sein und weist eine etwas geringere Breite auf als der zweite Zwischenring 28, so dass zwischen dem Schutzring 42 und den Verdichtungsringen 24 jeweils ein Spalt ausgebildet ist. Durch diesen Spalt kann beispielsweise bei der Montage trotz Schutzring 42 eine stoffschlüssige Verbindung zwischen dem zweiten Zwischenring 28 und den Verdichtungsringen 24 hergestellt werden, beispielsweise durch Laserschweißen oder Spiegelschweißen.

Die Verdichtungsringe 24 sind jeweils aus einer ersten Halbschale 38 und einer zweiten Halbschale 40 zusammengesetzt. Die Halbschalen 38, 40 können symmetrisch ausgebildet sein und zur Montage jeweils auf den Tragkörper 18 aufgeschoben werden. Seitlich weisen die Verdichtungsringe 24 jeweils eine plane Seitenfläche 44 auf, mit der ein Zwischenring 26, 28 stoffschlüssig verbunden werden kann. An einer Seite ist neben der Ringeinheit 36 ein erster Zwischenring 26 entlang der Drehachse 22 angeordnet, wobei der erste Durchmesser d1 des ersten Zwischenrings 26 kleiner ist als der zweite Durchmesser d2 des zweiten Zwischenringes 26. Die Breiten b1, b2 des ersten und zweiten Zwischenringes 26, 28 sind im Wesentlichen gleich groß.

Figur 3 zeigt eine perspektivische Darstellung der Ringeinheit 36 aus Figur 2 und des daran angeordneten ersten Zwischenringes 26. Hierbei ist ein Innenprofil 46 des ersten Zwischenringes 26 und des linken Verdichtungsringes 24 der Ringeinheit 36 dargestellt. Das Innenprofil 46 ist in Form eines Vierkantprofils entsprechend des (nicht dargestellten) Tragkörpers 18 ausgestaltet. Der Tragkörper (nicht dargestellt) ist in Form einer Vierkantwelle bzw. eines Vierkantprofils ausgebildet, wodurch eine formschlüssige Verbindung der Ringeinheit 36, der Verdichtungsringe 24 und/oder Zwischenringe 26, 28 mit dem Tragkörper 18 ermöglicht wird. Der erste Zwischenring 26 weist innenseitig eine Rippenstruktur 50 und Ausnehmungen 52 auf, wodurch eine Festigkeit des Zwischenringes 26 bei gleichzeitiger Gewichtsreduktion erhöht werden kann.

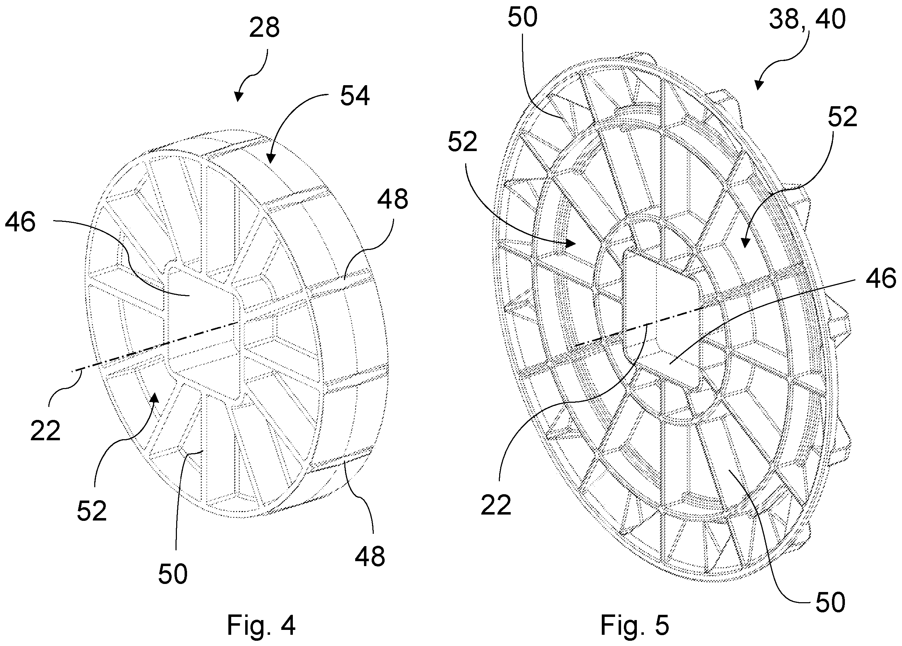

Der in Figur 4 dargestellte zweite Zwischenring 28 weist ebenfalls innenseitig eine Rippenstruktur 50 sowie Ausnehmungen 52 auf. Das Innenprofil 46 des zweiten Zwischenringes 28 ist entsprechend des Tragkörpers (nicht dargestellt) in Form eines Vierkantprofils ausgebildet, um eine formschlüssige Verbindung mit dem Tragkörper zu ermöglichen. Radial außenseitig weißt der zweite Zwischenring 28 eine Umfangsfläche 54 auf. Auf der Umfangsfläche 54 ist ein Außenprofil 48 ausgebildet, welches in Form von sich nach radial außenseitig erhebenden Stegen ausgestaltet ist. Durch das Außenprofil 48 kann eine, beispielsweise kraftschlüssige, formschlüssige und/oder stoffschlüssige, Verbindung mit dem Schutzring (nicht dargestellt) verbessert werden.

Eine Halbschale 38, 40 eines Verdichtungsringes 24 ist in Figur 5 in einer perspektivischen Ansicht dargestellt. Die Halbschale 38, 40 weist innenseitig eine Rippenstruktur 50 sowie Ausnehmungen 52 auf. Zur formschlüssigen Verbindung mit dem Tragkörper (nicht dargestellt), weist die Halbschale 38, 40 zudem ein Innenprofil 46 in Form eines Vierkantprofils auf. Die Halbschalen 38, 40 sind symmetrisch ausgebildet und können, insbesondere vor einer Montage auf dem Tragkörper oder vor einer Montage zu einer Ringeinheit, stoffschlüssig miteinander verbunden werden. Die Ringeinheit 36, die Halbschalen 38, 40, die Verdichtungsringe 24 und/oder die Zwischenringe 26, 28 können als Kunststoffteile, insbesondere als Spritzgußteile, hergestellt werden. Dies bietet den Vorteil, dass eine Rippenstruktur 50 sowie Ausnehmungen 52 kostengünstig herstellbar sind.

### Bezugszeichen

| | | | |
|---|---|---|---|
| 10 | Walze | d1 | Erster Durchmesser |
| 12 | Landwirtschaftliches Gerät | d2 | Zweiter Durchmesser |
| 14 | Tragrahmen | b1 | Erste Breite |
| 16 | Grundrahmen | b2 | Zweite Breite |
| 18 | Tragkörper | | |
| 20 | Steg | | |
| 22 | Drehachse | | |
| 24 | Verdichtungsring | | |
| 26 | Erster Zwischenring | | |
| 28 | Zweiter Zwischenring | | |
| 30 | Bodeneingriffsmittel | | |
| 32 | Ausräumer | | |
| 34 | Abstreifer | | |
| 36 | Ringeinheit | | |
| 38 | Erste Halbschale | | |
| 40 | Zweite Halbschale | | |
| 42 | Schutzring | | |
| 44 | Seitenfläche | | |
| 46 | Innenprofil | | |
| 48 | Außenprofil | | |
| 50 | Rippenstruktur | | |
| 52 | Ausnehmungen | | |
| 54 | Umfangsfläche | | |
| 56 | Lagervorrichtung | | |

## Patentansprüche

1. Walze zur landwirtschaftlichen Bodenbearbeitung mit mindestens einem um eine Drehachse (22) drehbar gelagerten Tragkörper (18) und mehreren voneinander beabstandet nebeneinander an dem Tragkörper (18) angeordneten Verdichtungsringen (24) zur Verdichtung des Bodens und zwischen benachbarten Verdichtungsringen (24) angeordneten Zwischenringen (26, 28), wobei mindestens ein erster Zwischenring (26) und ein zweiter Zwischenring (28) mit unterschiedlichen Durchmessern (d1, d2) und/oder unterschiedlichen Breiten (b1, b2) vorgesehen sind,
**dadurch gekennzeichnet, dass** die Walze (10) mindestens eine Ringeinheit (36) aufweist, welche mindestens einen Verdichtungsring (24) und mindestens einen, insbesondere zweiten, Zwischenring (26, 28) umfasst, wobei der Zwischenring (26, 28) mit mindestens einem benachbarten Verdichtungsring (24) stoffschlüssig verbunden oder einstückig mit dem Verdichtungsring (24) ausgebildet ist.

2. Walze nach Anspruch 1, **dadurch gekennzeichnet, dass** die Walze (10) mindestens einen ersten Zwischenring (26) mit einem ersten Durchmesser (d1) und einer ersten Breite (b1) und mindestens einen zweiten Zwischenring (28) mit einem zweiten Durchmesser (d2) und einer zweiten Breite (b2) aufweist, wobei der erste Durchmesser (d1) kleiner ist als der zweite Durchmesser (d2) und/oder die erste Breite (b1) kleiner ist als die zweite Breite (b2).

3. Walze nach Anspruch 1 oder 2, **dadurch gekennzeichnet, dass** der, insbesondere zweite, Zwischenring (28) umfangsseitig einen Schutzring (42) aufweist.

4. Walze nach einem der vorhergehenden Ansprüche, **dadurch gekennzeichnet, dass** die Verdichtungsringe (24) und/oder die Zwischenringe (26, 28) jeweils ein Innenprofil (46) zur kraftschlüssigen und/oder formschlüssigen Verbindung mit dem Tragkörper (18) aufweisen.

5. Walze nach einem der vorhergehenden Ansprüche, **dadurch gekennzeichnet, dass** der Tragkörper (18) in Form eines Vierkantrohres und das Innenprofil (46) in Form eines an die Form des Tragkörpers (18) zur Wirkverbindung angepaßten Vierkantprofils ausgebildet ist.

6. Walze nach einem der vorhergehenden Ansprüche, **dadurch gekennzeichnet, dass** der Verdichtungsring (24) aus mindestens zwei Halbschalen (38, 40), insbesondere stoffschlüssig, zusammengesetzt ist.

7. Walze nach einem der vorhergehenden Ansprüche, **dadurch gekennzeichnet, dass** der Verdichtungsring (24) zumindest an einer Seite eine im Wesentlichen plane Seitenfläche (44) zur stoffschlüssigen Verbindung mit einem, insbesondere zweiten, Zwischenring (26, 28) aufweist.

8. Walze nach einem der vorhergehenden Ansprüche, **dadurch gekennzeichnet, dass** die Ringeinheit (36), der Verdichtungsring (24), die Halbschalen (38, 40) und/oder der Zwischenring (26, 28) in Form eines Spritzgußteils hergestellt sind.

9. Walze nach einem der vorhergehenden Ansprüche, **dadurch gekennzeichnet, dass** die Ringeinheit (36), der Verdichtungsring (24), die Halbschalen (38, 40) und/oder der Zwischenring (26, 28) eine innenseitig ausgebildete Rippenstruktur (50) und/oder Ausnehmungen (52) aufweisen.

10. Walze nach einem der vorhergehenden Ansprüche, **dadurch gekennzeichnet, dass** der, insbesondere zweite, Zwischenring (26, 28) entlang seiner Umfangsseite ein Außenprofil (48) aufweist, welches sich insbesondere nach radial außenseitig von der Umfangsfläche erstreckt.

11. Walze nach einem der vorhergehenden Ansprüche, **dadurch gekennzeichnet, dass** eine stoffschlüssige Verbindung zwischen den Halbschalen (38, 40) und/oder zwischen dem Verbindungsring (24) und mindestens einem Zwischenring (26, 28) durch zumindest teilweises Kleben und/oder Verschweißen, insbesondere durch Laserstrahlschweißen oder Heizelementschweißen, hergestellt ist.

12. Walze nach einem der vorhergehenden Ansprüche, **dadurch gekennzeichnet, dass** dem ersten Zwischenring (26) ein Ausräumer (32) zugeordnet ist und/oder dem zweiten Zwischenring (28) ein Abstreifer (34) zugeordnet ist.

13. Walze nach einem der vorhergehenden Ansprüche, **dadurch gekennzeichnet, dass** endseitig an dem Tragkörper (18) mindestens eine Lagervorrichtung (56) angeordnet ist, welche eine einstellbare axiale Vorspannkraft aufweist, welche eine Aufbringung einer im Wesentlichen axialen Kraft auf die Ringeinheit (36), Verdichtungsringe (24) und/oder Zwischenringe (26, 28) ermöglicht.

14. Walze nach einem der vorhergehenden Ansprüche, **dadurch gekennzeichnet, dass** die Walze (10) mehrere, jeweils an einem Grundrahmen (16) gelagerte Tragkörper (18) aufweist, welche insbesondere klappbar miteinander verbunden sind.

15. Landwirtschaftliches Gerät (12) zur Bodenbearbeitung und/oder Ausbringung von körnigen Feststoffen in Form von Dünger und/oder Saatgut mit mindestens einer Walze (10) gemäß einem der Ansprüche 1 bis 14.

16. Landwirtschaftliches Gerät nach Anspruch 15, **dadurch gekennzeichnet, dass** das landwirtschaftliche Gerät (12) in Arbeitsrichtung vor der mindestens einen Walze (10) eine Mehrzahl an Bodeneingriffsmitteln (30) in Form von Reifen und/oder Raupen aufweist.

## Claims

1. A roller for agricultural soil cultivation having at least one support body (18) rotatably mounted about an axis of rotation (22) and multiple compaction rings (24) arranged spaced apart next to one another on the support body (18) for compacting the ground and intermediate rings (26, 28) arranged between adjacent compaction rings (24), wherein at least one first intermediate ring (26) and a second intermediate ring (28) with different diameters (d1, d2) and/or different widths (b1, b2) are provided,
**characterised in that** the roller (10) comprises at least one ring unit (36), which includes a compaction ring (24) and at least one, in particular second, intermediate ring (26, 28), wherein the intermediate ring (26, 28) is connected to at least one adjacent compaction ring (24) in a materially bonded manner or configured integrally with the compaction ring (24).

2. The roller according to Claim 1,
**characterised in that** the roller (10) comprises at least one first intermediate ring (26) with a first diameter (d1) and a first width (b1) and at least one second intermediate ring (28) with a second diameter (d2) and a second width (b2), wherein the first diameter (d1) is smaller than the second diameter (d2) and/or the first width (b1) is smaller than the second width (b2).

3. The roller according to Claim 1 or 2,
**characterised in that** the, in particular second, intermediate ring (28) circumferentially comprises a protective ring (42).

4. The roller according to any one of the preceding claims, **characterised in that** the compaction rings (24) and/or the intermediate rings (26, 28) each have an inner profile (46) for the non-positive and/or positive connection to the support body (18).

5. The roller according to any one of the preceding claims, **characterised in that** the support body (18) is designed in the form of a square tube and the inner profile (46) in the form of a square profile matched to the form of the support body (18) for the operative connection.

6. The roller according to any one of the preceding claims, **characterised in that** the compaction ring (24) is assembled from at least two half shells (38, 40) in particular in a materially bonded manner.

7. The roller according to any one of the preceding claims, **characterised in that** the compaction ring (24) comprises at least on a side a substantially flat lateral surface (44) for the materially bonded connection to a, in particular second, intermediate ring (26, 28).

8. The roller according to any one of the preceding claims, **characterised in that** the ring unit (36), the compaction ring (24), the half shells (38, 40) and/or the intermediate ring (26, 28) are produced in the form of an injection moulded part.

9. The roller according to any one of the preceding claims, **characterised in that** the ring unit (36), the compaction ring (24), the half shells (38, 40) and/or the intermediate ring (26, 28) have a rib structure (50) and/or recesses (52) formed on the inside.

10. The roller according to any one of the preceding claims, **characterised in that** the, in particular second, intermediate ring (26, 28) has an outer profile (48) along its circumferential side, which extends from the circumferential surface in particular radially to the outside.

11. The roller according to any one of the preceding claims, **characterised in that** a materially bonded connection between the half shells (38, 40) and/or between the connecting ring (24) and at least one intermediate ring (26, 28) through at least partial gluing and/or welding, in particular through laser beam welding or heated tool welding is established.

12. The roller according to any one of the preceding claims, **characterised in that** the first intermediate ring (26) is assigned a clearer (32) and/or the second intermediate ring (28) is assigned a stripper (34).

13. The roller according to any one of the preceding claims, **characterised in that** at least one bearing device (56) is arranged on the support body (18) end side, which comprises an adjustable axial preload force which makes possible applying a substantially axial force onto the ring unit (36), compaction rings (24) and/or intermediate rings (26, 28).

14. The roller according to any one of the preceding claims, **characterised in that** the roller (10) comprises multiple support bodies (18) each mounted on a main frame (16), which are connected to one another in particular so as to be foldable.

15. An agricultural unit (12) for soil cultivation and/or application of granular solids in the form of fertiliser and/or seeds having at least one roller (10) according to any one of the Claims 1 to 14.

16. The agricultural unit according to Claim 15, **characterised in that** the agricultural unit (12) in the working direction in front of the at least one roller (10) comprises a plurality of ground engagement means (30) in the form of tyres and/or tracks.

## Revendications

1. Rouleau, destiné au travail agricole du sol, doté d'au moins un corps porteur (18) logé de manière rotative autour d'un axe de rotation (22) et de plusieurs bagues de compression (24) placées côte à côte avec un écart mutuel sur le corps porteur (18) pour comprimer le sol et de bagues intermédiaires (26, 28) placées entre des bagues de compression (24) voisines, au moins une première bague intermédiaire (26) et une deuxième bague intermédiaire (28) de différents diamètres (d1, d2) et/ou de différentes largeurs (b1, b2) étant prévues,
**caractérisé en ce que** le rouleau (10) comporte au moins une unité de bagues (36), laquelle comprend au moins une bague de compression (24) et au moins une, notamment deuxième bague intermédiaire (26, 28), la bague intermédiaire (26, 28) étant reliée par conjugaison de matière avec au moins une bague de compression (24) voisine ou étant conçue d'un seul tenant avec la bague de compression (24).

2. Rouleau selon la revendication 1, **caractérisé en ce que** le rouleau (10) comporte au moins une première bague intermédiaire (26) d'un premier diamètre (d1) et d'une première largeur (b1) et au moins une deuxième bague intermédiaire (28) d'un deuxième diamètre (d2) et d'une deuxième largeur (b2), le premier diamètre (d1) étant inférieur au deuxième diamètre (d2) et/ou la première largeur (b1) étant inférieure à la deuxième largeur (b2).

3. Rouleau selon la revendication 1 ou 2, **caractérisé en ce que** la notamment deuxième bague intermédiaire (28) comporte sur sa circonférence une bague protectrice (42).

4. Rouleau selon l'une quelconque des revendications précédentes, **caractérisé en ce que** les bagues de compression (24) et/ou les bagues intermédiaires (26, 28) comportent chacune un profil intérieur (46), pour l'assemblage par complémentarité de force et/ou par complémentarité de forme avec le corps porteur (18).

5. Rouleau selon l'une quelconque des revendications précédentes, **caractérisé en ce que** le corps porteur (18) est conçu sous la forme d'un tube carré et le profilé intérieur (46) est conçu sous la forme d'un profilé carré adapté pour l'interaction à la forme du corps porteur (18).

6. Rouleau selon l'une quelconque des revendications précédentes, **caractérisé en ce que** la bague de compression (24) est assemblée, notamment par conjugaison de matières à partir d'au moins deux demi-coques (38, 40).

7. Rouleau selon l'une quelconque des revendications précédentes, **caractérisé en ce que** la bague de compression (24) comporte au moins sur une face une surface latérale (44) sensiblement plane, pour la liaison par conjugaison de matières avec une notamment deuxième bague intermédiaire (26, 28).

8. Rouleau selon l'une quelconque des revendications précédentes, **caractérisé en ce que** l'unité de bagues (36), la bague de compression (24), les demi-coques (38, 40) et/ou la bague intermédiaire (26, 28) sont fabriquées sous la forme d'une pièce moulée par injection.

9. Rouleau selon l'une quelconque des revendications précédentes, **caractérisé en ce que** l'unité de bagues (36), la bague de compression (24), les demi-coques (38, 40) et/ou la bague intermédiaire (26, 28) comportent une structure nervurée (50) conçue sur la face intérieure et/ou des évidements (52).

10. Rouleau selon l'une quelconque des revendications précédentes, **caractérisé en ce que** le long de sa face circonférentielle, la notamment deuxième bague intermédiaire (26, 28) comporte un profil extérieur (48), qui s'étend notamment vers la face extérieure en direction radiale de la surface circonférentielle.

11. Rouleau selon l'une quelconque des revendications précédentes, **caractérisé en ce qu'**une liaison par conjugaison de matières est établie entre les demi-coques (38, 40) et/ou la bague de liaison (24) et au moins une bague intermédiaire (26, 28) par collage et/ou soudage au moins partiel, notamment par soudage au laser ou par soudage par éléments chauffants.

12. Rouleau selon l'une quelconque des revendications précédentes, **caractérisé en ce qu'**à la première bague intermédiaire (26) est affecté un extracteur (32) et/ou à la deuxième bague intermédiaire (28) est affecté un racleur (34).

13. Rouleau selon l'une quelconque des revendications précédentes, **caractérisé en ce que** sur le côté d'extrémité sur le corps porteur (18) est placé au moins un dispositif de paliers (56), lequel dispose d'une force de précontrainte axiale réglable, laquelle permet une application d'une force sensiblement axiale sur l'unité de bagues (36), des bagues de compression (24) et/ou des bagues intermédiaires (26, 28).

14. Rouleau selon l'une quelconque des revendications précédentes, **caractérisé en ce que** le rouleau comporte (10) plusieurs corps porteurs (18), logés chacun sur un bâti de base (16), lesquels sont reliés les uns avec les autres notamment de manière rabattable.

15. Engin agricole (12), destiné au travail du sol et/ou à l'épandage de matières solides grenues, sous la forme de fertilisants et/ou de semences, doté d'au moins un rouleau (10) selon l'une quelconque des revendications 1 à 14.

16. Engin agricole selon la revendication 15, **caractérisé en ce qu'**à l'avant de l'au moins un rouleau (10), dans la direction de travail, l'engin agricole (12) comporte une pluralité de moyens de contact avec le sol (30) sous la forme de pneus et/ou de chenilles.
